# EUROPÄISCHE PATENTSCHRIFT

(11) **EP 2 838 942 B1**
(45) Veröffentlichungstag und Bekanntmachung des Hinweises auf die Patenterteilung: **12.06.2019**
(21) Anmeldenummer: 13708436.4
(22) Anmeldetag: 11.03.2013
(51) Int. Cl.: C08K 3/00, C08K 9/04, C08L 21/00

(54) **KAUTSCHUKMISCHUNG**
RUBBER MIXTURE
MÉLANGE CAOUTCHOUTEUX

(30) Priorität: 16.04.2012 DE 102012103273
(43) Veröffentlichungstag der Anmeldung: 25.02.2015
(73) Patentinhaber: Continental Reifen Deutschland GmbH, 30165 Hannover (DE)
(72) Erfinder: STOLLBERG, Sandra, 31553 Auhagen (DE); HIRSCHLAG, Hubert, 30880 Laatzen (DE); LACAYO-PINEDA, Jorge, 31535 Neustadt (DE)
(74) Vertreter: Preusser, Andrea
(86) Internationale Anmeldenummer: PCT/EP2013/054822
(87) Internationale Veröffentlichungsnummer: WO 2013/156203

(56) Entgegenhaltungen:
- EP-A1- 0 476 385
- FR-A1- 2 603 273
- US-A- 4 740 559
- US-A- 4 775 724
- DATABASE WPI Week 198832 Thomson Scientific, London, GB; AN 1988-224312 XP002696345, -& JP S63 159453 A (SANSHIN KAGAKU KOGYO CO) 2. Juli 1988 (1988-07-02) & DATABASE CA [Online] CHEMICAL ABSTRACTS SERVICE, COLUMBUS, OHIO, US; 24. Dezember 1988 (1988-12-24), SAKAI, TOSHIAKI: "Free-flowing powdered sulfur compositions with good dispersibility, their manufacture and use", XP002696697, gefunden im STN Database accession no. 1988:632584
- DATABASE WPI Week 201210 Thomson Scientific, London, GB; AN 2012-B34901 XP002696406, -& JP 2012 021058 A (SUMITOMO RUBBER IND LTD) 2. Februar 2012 (2012-02-02)
- DATABASE WPI Week 201210 Thomson Scientific, London, GB; AN 2012-B34784 XP002696419, -& JP 2012 021091 A (SUMITOMO RUBBER IND LTD) 2. Februar 2012 (2012-02-02)

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Ein wesentlicher Bestandteil von Kautschukmischungen ist elementarer Schwefel, der während der Vulkanisation essentiell für die Vernetzung der in der Kautschukmischung enthaltenden Polymere ist. Eine nicht ausreichende und / oder schlechte Vernetzung spiegelt sich in mangelhaften physikalischen Eigenschaften der Kautschukmischung wieder. Um eine gute Vernetzung gewährleisten zu können, muss der Schwefel in der Kautschukmischung gut dispergiert, d.h. gleichmäßig verteilt, werden.
Der in Fahrzeugluftreifen und technischen Kautschukprodukten verwendete Schwefel ist oft ein unlöslicher Schwefel, welcher zur Staubbindung und dadurch zum Explosionsschutz während des Herstell- oder Verarbeitungsprozesses mit Öl versetzt wird. Bei diesem Öl handelt es sich in der Regel um Weichmacheröle, wie sie in der Kautschukindustrie gebräuchlich sind, wie z.B. naphthenische Öle.
Das verwendete Öl bestimmt in nicht unerheblichem Maße die Dispergierbarkeit des Schwefels.

Example 1 des Dokuments D1 offenbart eine Kautschukmischung umfassend einen NR, einen Ruß, ZnO, ein aromatisches Öl und ein Schwefelpulver mit 0,2 Gew.-% Methylstyrol (vgl. Examples 1 in Dokument D1).

Example 5 des Dokuments D2 offenbart eine Kautschukmischung umfassend einen NR, einen Ruß, Zinkweiß, ein aromatisches Öl und ein Schwefelpulver, welches in einer Kohlenstoffdisulfid-Lösung mit 0,2 Gew.-% Methylstyrol gemischt wurde (vgl. Example 5 und Examples 1 in Dokument D2).

Dokument D3 offenbart eine oder mehrere Schwefelmischungen zum Gebrauch als Vulkanisationsmittel mit guter Dispergierbarkeit. Die Schwefelmischung umfasst einen mit Prozessöl oberflächenbehandelten Schwefel und zumindest eine Verbindung ausgesucht aus ZnO, CaCO₃, SiO₂, und MgCO₃. Das Prozessöl umfasst dabei 1 bis 20 Gewichtsanteile bezogen auf den Schwefel und umfasst naphtenische und paraffinische Prozessöle.

Dokument D4 offenbart Kautschukmischungen mit guten Niedrig-Spritverbrauch-Eigneschaften und vorteilhafter Ozonbeständigkeit.

Dokument D5 offenbart Kautschukmischungen mit vorteilhafter Ozonbeständigkeit und reduziertem Ausblühen. Dokument D5 offenbart jedoch keinen Schwefel.

Dokument D6 offenbart einen Prozess zur Herstellung eines verbesserten Vulkanisationsagenten (vgl. Anspruch 1) zum Ziel des reduzierten Ausblühens und der verbesserten Adhäsion (vgl. Abstract).
Anspruch 1 des Dokuments D6 offenbart ein Verfahren, in dem in Schritt B. ein Schwefel mit einem ungesättigten Reaktant ausgesucht von d-Limonen, 5-Ethyliden-2-norbornen, Styrol und Dicyclopentadien gemischt wird.

Dokument D7 offenbart ein Syntheseprotokoll für imprägnierten Schwefel.

Die Aufgabe der vorliegenden Erfindung ist es daher, eine Kautschukmischung, insbesondere für Fahrzeugluftreifen, Gurte und Riemen, bereitzustellen, die sich durch eine verbesserte Dispergierbarkeit des Schwefels in Kautschukmischungen auszeichnet. Gleichzeitig sollen dadurch die Reißfestigkeit und die Haltbarkeit der Kautschukmischung positiv beeinflusst werden.

Gelöst wird diese Aufgabe durch ein Verfahren zur Herstellung einer Kautschukmischung umfassend zumindest die folgenden Schritte:
a) Vermischen wenigstens eines Schwefels mit wenigstens einem Terpen und / oder mit wenigstens einem hochviskosen Öl,
b) Dispergieren der wenigstens ein Terpen und / oder wenigstens ein hochviskoses Öl umfassenden Schwefelmischung aus Schritt a) in einer Kautschukmischung, wobei
   - das Terpen ein ausschließlich aus Isopreneinheiten aufgebautes Kohlenwasserstoffgerüst aufweist,
   - das hochviskose Öl eine kinematische Viskosität bei 40°C von größer 80 mm²/s hat und
   - die Kautschukmischung zumindest die folgenden Stoffe umfasst:
   - wenigstens einen polaren oder unpolaren Kautschuk und
   - wenigstens einen hellen und/oder dunklen Füllstoff und
   - weitere Zusatzstoffe.

Überraschenderweise wurde gefunden, dass sich der Schwefel in einer Kautschukmischung besser dispergieren lässt, wenn er mit wenigstens einem Terpenoid nämlich ein Terpen, und / oder mit wenigstens einem hochviskosen Öl vermischt ist.

Dadurch werden die bisher oft beobachteten Schwefelagglomerate in der Kautschukmischung signifikant reduziert. Derartige Schwefelagglomerate sind ein Indiz für eine schlechte Dispersion und müssen gegebenenfalls in einem weiteren Bearbeitungsschritt beseitigt werden, falls dies überhaupt möglich ist. Diese Agglomerate stellen in der Kautschukmischung Fremdkörper dar, die als Bruchzentren wirken können und so die Reißfestigkeit und die Haltbarkeit negativ beeinträchtigen. Erfindungswesentlich ist, dass die Kautschukmischung wenigstens einen Schwefel enthält, welcher mit wenigstens einem Terpenoid und / oder mit wenigstens einem hochviskosen Öl vermischt ist. Nur dann ist es möglich, dass der Schwefel in der Kautschukmischung besser dispergiert wird und sich die oben genannten Verbesserungen ergeben.
Terpenoide werden oft auch als Isoprenoide bezeichnet und sind eine strukturell heterogene Gruppe, die sich von zwei einfachen C5-Verbindungen (Isopentenyldiphosphat

IPDP bzw. dessen Isomer Dimethylallyldiphosphat DMAP) ableiten. Die Strukturen von Terpenoiden lassen sich deshalb durch die Vervielfachung von Isopren (2-Methylbutadien)-Einheiten, d.h. C5-Einheiten, aufbauen. Terpenoide beinhalten Terpene und Terpenderivate, welche keine ausschließlich aus Isopreneinheiten aufgebaute Kohlenwasserstoffgerüste besitzen. Terpenoide können cyklisch ausgebildet sein, gegebenenfalls mit offenen Ketten, und beispielsweise in Form von monocyclischen, bicyclischen, tricyclischen, etc, Terpenoiden vorliegen. Terpenoide können eine razemische Mischung aus enantiomeren Terpenoiden sein oder in in Reinform als optisch aktive Isomere der Terpenoide vorliegen.

Es handelt sich bei dem Terpenoid um ein Terpen mit einem ausschließlich aus Isopreneinheiten aufgebauten Kohlenwasserstoffgerüst.

Terpene können ausgewählt werden aus Hemiterpenen, Monoterpenen, Sesquiterpenen, Diterpenen, Sesterpenen und Triterpenen.

Terpenoide können auf verschiedenen Wegen gewonnen werden. Beispielsweise direkt aus Pflanzen bzw. Pflanzenbestandteilen, Pflanzenextrakten oder durch künstliche Behandlung von Pflanzen oder Pflanzenextrakten oder auch durch synthetische Herstellverfahren, wie sie der fachkundigen Person bekannt sind.

Besonders gute Ergebnisse lassen sich erzielen, wenn das Terpenoid und / oder das hochviskose Öl 20 bis 45 Kohlenstoffatome besitzt. Der Siedebereich der Terpenoide und / oder des hochviskosen Öls liegt vorteilhafterweise im Bereich zwischen 350 und 550°C. Der Anteil an cyclischen Alkanen, insbesondere Terpanen und / oder Triterpanen und / oder Steranen beträgt vorzugsweise zwischen 0,02 und 10 Gew.-%. Das hochviskose Öl hat eine kinematische Viskosität bei 40°C von größer 80 mm²/s.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält zumindest einen polaren oder unpolaren Kautschuk.
Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Bevorzugt ist es allerdings, wenn die Kautschukmischung natürliches und / oder synthetisches Polyisopren enthält und zwar in Mengen von 20 bis 100 phr, bevorzugt 30 bis 100 phr, besonders bevorzugt in Mengen von 40 bis 100 phr.
In einer besonderen Ausführungsform handelt es sich bei dem polaren oder unpolaren Kautschuk um einen Butadien-Kautschuk. Der Butadien-Kautschuk wird vorzugsweise in Mengen von 2 bis 60 phr, bevorzugt in Mengen von 2 bis 50 phr, besonders bevorzugt in Mengen von 5 bis 50 phr, ganz besonders bevorzugt in Mengen von 10 bis 50 phr und wiederum besonders bevorzugt in Mengen von 10 bis 45 phr verwendet.

Der polare oder unpolare Kautschuk kann ein Styrolbutadienkautschuk sein, der bevorzugt lösungspolymerisiert oder emulsionspolymerisiert ist. Der Styrolbutadienkautschuk kann hydriert sein und ist in einer besonders vorteilhaften Ausführungsform lösungspolymerisiert.
Des Weiteren kann der Styrolbutadienkautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, dem Fachmann bekannte, Modifizierungen, auch als Funktionalisierungen bezeichnet, in Frage.
Der Styrolbutadienkautschuk findet in Mengen von 2 bis 98 phr, bevorzugt 2 bis 90 phr, besonders bevorzugt 2 bis 80 phr, wiederum besonders bevorzugt in Mengen von 5 bis 80 phr, Verwendung.

Die erfindungsgemäße Kautschukmischung enthält des Weiteren zumindest einen hellen und / oder dunklen Füllstoff. Die Gesamtmenge an Füllstoff kann somit nur aus hellem oder dunklem Füllstoff oder aus einer Kombination von hellen und dunklen Füllstoffen bestehen.
Bevorzugt ist es, wenn der helle Füllstoff Kieselsäure, bevorzugt Fällungskieselsäure ist.

Die erfindungsgemäße Kautschukmischung enthält 1 bis 300 phr, bevorzugt 1 bis 250 phr, besonders bevorzugt 1 bis 200 phr, wiederum besonders bevorzugt 1 bis 150 phr, wiederum ganz besonders bevorzugt 1 bis 100 phr, Kieselsäure. Von dieser Gesamtmenge an Kieselsäure können 0 bis 100 % durch ein Kupplungsagens, bevorzugt Silan, an die Polymermatrix angebunden werden und / oder 0 bis 100 % nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche größer oder gleich 100 m²/g, bevorzugt zwischen 120 und 300 m²/g, besonders bevorzugt zwischen 140 und 250 m²/g, und einer CTAB-Oberfläche zwischen 100 und 250 m²/g , bevorzugt zwischen 120 und 230 m²/g und besonders bevorzugt zwischen 140 und 200 m²/g, eingesetzt.

Falls ein Kupplungsagens, in Form von Silan oder einer siliziumorganischen Verbindung, verwendet wird, so beträgt die Menge des Kupplungsagens 0 bis 20 phr, bevorzugt 0,1 bis 15 phr, besonders bevorzugt 0,5 bis 10 phr. Als Kupplungsagenzien können dabei alle dem Fachmann für die Verwendung in Kautschukmischungen Kupplungsagenzien verwendet werden.

Bei dem dunklen Füllstoff handelt es sich bevorzugt um Ruß und zwar bevorzugt in Mengen von 0 bis 100 phr, besonders bevorzugt in Mengen von 0 bis 80 phr, wenigstens aber 0,1 phr, insbesondere wenigstens aber 0,5 phr, zumindest eines Rußes. In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

In der Kautschukmischung kann weiterhin noch wenigstens ein Weichmacher vorhanden sein. Dieser Weichmacher ist ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder Terpenen und / oder Pflanzenölen und / oder BTL-(Biomass-To-Liquid)Ölen und / oder RTL-(Rubber-To-Liquid)-Ölen und / oder flüssigen Polymeren mit einem Molekulargewicht zwischen 200 und 200000 g/mol. Der Weichmacher wird bevorzugt in Mengen von 0,1 bis 100 phr, besonders bevorzugt in Mengen von 0,1 bis 80 phr und ganz besonders bevorzugt in Mengen von 0,1 bis 50 phr eingesetzt.

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.
Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel, wie bspw. des erfindungsgemäßen Schwefels, oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 20 phr, elementarer Schwefel bevorzugt in Mengen von 0 bis 10 phr, besonders bevorzugt in Mengen von 0,1 bis 6 phr) der Kautschukmischung zugesetzt. Der erfindungsgemäße Schwefel sollte wenigstens in Mengen von 0,1 phr, insbesondere in Mengen von 0,5 phr, in der Kautschukmischung vorhanden sein. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt.
Die Herstellung der Schläuche erfolgt analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in der Tabelle 1 zusammengefasst sind, näher erläutert werden.
Die Vergleichsbeispiele sind mit V, die erfindungsgemäßen Beispiele sind mit E gekennzeichnet.
Die Mischungsherstellung erfolgte nach dem in der Kautschukindustrie üblichen Verfahren unter üblichen Bedingungen in zwei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden.

Aus sämtlichen Mischungen wurden Prüfkörper durch Vulkanisation unter Druck bei 160°C in 20 Minuten hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) gemäß DIN ISO 7619-1
- Rückprallelastizität bei RT gemäß DIN 53 512
- Reißfestigkeit, Reißdehnung und Spannungswert bei 50% sowie 300% Dehnung (Modul 50 und Modul 300) sowie Reißenergiedichte bei Raumtemperatur gemäß DIN 53 504

### Verwendete Substanzen

a) Zusatzstoffe: Prozesshilfsmittel Peptizer, Öl, Stearinsäure, Plasticizer, Silika, Phenolharz, Alterungsschutzmittel, organisches Cobaltsalz, Harz aus Resorcin und Formaldehydspender, Zinkoxid
b) Zusatzstoffe: Silika, aliphatisches Harz, Phenolharz, Zinkoxid, Alterungsschutzmittel 6PPD, Verstärkerharz
c) Beschleuniger: DCBS, CTP
d) Beschleuniger: CBS
e) Schwefel: OT33: 67 Gew.-% Schwefel, 33 Gew.-% naphthenisches Öl mit: kinematische Viskosität bei 40 °C = 18 bis 28 mm²/s; Siedebereich = 410 bis 540 °C; 40 bis 45 Kohlenstoffatome; 0,1 Gew.-% Anteil an cyclischen Alkanen
f) Schwefel: 67 Gew.-% Schwefel, 33 Gew.-% hochviskoses Öl mit: kinematische Viskosität bei 40 °C = 98 mm²/s

**Tabelle 1**

| **Bestandteile** | **Einheit** | **V1** | **E1** | **V2** | **E2** |
|---|---|---|---|---|---|
| NR | phr | 100 | 100 | 100 | 100 |
| Ruß N339 | phr | 63 | 63 | 27 | 27 |
| Zusatzstoffe ^{a)} | phr | 26 | 26 | - | - |
| Zusatzstoffe ^{b)} | phr | - | - | 24 | 24 |
| Beschleuniger ^{c)} | phr | 0,95 | 0,95 | - | - |
| Beschleuniger ^{d)} | phr | - | - | 2,1 | 2,1 |
| Schwefel ^{e)} | phr | 6,75 | - | 4,5 | - |
| Schwefel ^{f)} | phr | - | 6,75 | - | 4,5 |
| | | | | | |

| **Physikalische Eigenschaften** | | | | | |
|---|---|---|---|---|---|
| Shore Härte bei RT | Shore A | 78,2 | 78,6 | 56,9 | 57,5 |
| Reißfestigkeit | MPa | 19,3 | 20,5 | 17,8 | 20,9 |
| Reißdehnung | % | 369 | 395 | 447 | 505 |
| Modul 50 | MPa | 2,3 | 2,4 | 1,1 | 1,1 |
| Modul 300 | MPa | 17,1 | 17,3 | 11,5 | 10,7 |
| Reißenergiedichte | J/cm³ | 44,8 | 53,3 | 44,8 | 54,4 |

Wie in Tabelle 1 erkennbar ist, zeigen die erfindungsgemäßen Kautschukmischungen E1 und E2 im Vergleich zu ihren jeweiligen Referenzen V1 bzw. V2 eine verbesserte Dispersion des Schwefels, was an den verbesserten Werten für die Reißfestigkeit und die Reißenergiedichte bei vergleichbarer Shore Härte A erkennbar ist. Hieraus ergibt sich eine verbesserte Haltbarkeit der erfindungsgemäßen Kautschukmischungen. Der Unterschied zwischen E1 und E2 gegenüber V1 bzw. V2 besteht jeweils nur in dem Schwefel, welcher erfindungsgemäß mit wenigstens einem Terpenoid und / oder mit wenigstens einem hochviskosen Öl anstelle eines naphthenischen Öls vermischt ist. Somit wird die der Erfindung zugrunde liegende Aufgabe durch eine Kautschukmischung gemäß Anspruch 1 gelöst.

## Patentansprüche

1. Verfahren zur Herstellung einer Kautschukmischung umfassend zumindest die folgenden Schritte:
a) Vermischen wenigstens eines Schwefels mit wenigstens einem Terpen und / oder mit wenigstens einem hochviskosen Öl,
b) Dispergieren der wenigstens ein Terpen und / oder wenigstens ein hochviskoses Öl umfassenden Schwefelmischung aus Schritt a) in einer Kautschukmischung, wobei
- das Terpen ein ausschließlich aus Isopreneinheiten aufgebautes Kohlenwasserstoffgerüst aufweist,
- das hochviskose Öl eine kinematische Viskosität bei 40°C von größer 80 mm²/s hat und
- die Kautschukmischung zumindest die folgenden Stoffe umfasst:
- wenigstens einen polaren oder unpolaren Kautschuk und
- wenigstens einen hellen und / oder dunklen Füllstoff und
- weitere Zusatzstoffe.

2. Verfahren nach Anspruch 1, **dadurch gekennzeichnet, dass** das Terpen ausgewählt ist aus Hemiterpenen, Monoterpenen, Sesquiterpenen, Diterpenen, Sesterpenen und Triterpenen.

3. Verfahren nach einem der Ansprüche 1 bis 3, **dadurch gekennzeichnet, dass** die in Schritt b) resultierende Kautschukmischung 0,4 bis 20 phr Schwefel umfasst.

4. Verfahren gemäß einem der Ansprüche 1 bis 3, **dadurch gekennzeichnet, dass** der Schwefel in einem einstufigen oder mehrstufigen Mischverfahren eingesetzt wird.

5. Verwendung einer Kautschukmischung herstellbar oder hergestellt gemäß einem der Ansprüche 1 bis 3 zur Herstellung eines Reifens.

6. Verwendung einer Kautschukmischung herstellbar oder hergestellt gemäß einem der Ansprüche 1 bis 3 zur Herstellung eines Laufstreifens und / oder einer Body-Mischung eines Reifens.

7. Verwendung
- wenigstens eines Terpens wie in einem der Ansprüche 1 bis 2 definiert und / oder
- wenigstens eines hochviskosen Öls wie in einem der Ansprüche 1 bis 2 definiert
zur Verbesserung der Dispergierbarkeit von Schwefel in Kautschukmischungen, bevorzugt zur Verbesserung der Dispergierbarkeit von 0,4 bis 20 phr Schwefel in Kautschukmischungen.

## Claims

1. Process for producing a rubber mixture comprising at least the following steps:
a) mixing at least one sulfur with at least one terpene and/or with at least one high-viscosity oil,
b) dispersing the sulfur mixture comprising at least one terpene and/or at least one high-viscosity oil from step a) in a rubber mixture, wherein
- the terpene has a hydrocarbon backbone constructed exclusively of isoprene units,
- the high-viscosity oil has a kinematic viscosity at 40°C of greater than 80 mm²/s
and
- the rubber mixture comprises at least the following substances:
- at least one polar or nonpolar rubber and
- at least one light-coloured and/or dark-coloured filler and
- further additives.

2. Process according to Claim 1, **characterized in that** the terpene is selected from hemiterpenes, monoterpenes, sesquiterpenes, diterpenes, sesterpenes and triterpenes.

3. Process according to any of Claims 1 to 3, **characterized in that** the rubber mixture resulting in step b) comprises 0.4 to 20 phr of sulfur.

4. Process according to any of Claims 1 to 3, **characterized in that** the sulfur is employed in a single-stage or multi-stage mixing process.

5. Use of a rubber mixture producible or produced according to any of Claims 1 to 3 for producing a tyre.

6. Use of a rubber mixture producible or produced according to any of Claims 1 to 3 for producing a tread and/or a body mixture of a tyre.

7. Use
- of at least one terpene as defined in either of Claims 1 and 2 and/or
- of at least one high-viscosity oil as defined in either of Claims 1 and 2
for improving the dispersibility of sulfur in rubber mixtures, preferably for improving the dispersibility of 0.4 to 20 phr of sulfur in rubber mixtures.

## Revendications

1. Procédé de fabrication d'un mélange de caoutchouc comprenant au moins les étapes suivantes :
a) le mélange d'au moins un soufre avec au moins un terpène et/ou avec au moins une huile hautement visqueuse,
b) la dispersion du mélange de soufre comprenant au moins un terpène et/ou au moins une huile hautement visqueuse de l'étape a) dans un mélange de caoutchouc,
- le terpène comprenant un squelette hydrocarboné exclusivement formé par des unités isoprène,
- l'huile hautement visqueuse ayant une viscosité cinématique à 40 °C de plus de 80 mm²/s,
et
- le mélange de caoutchouc comprenant au moins les substances suivantes :
- au moins un caoutchouc polaire ou apolaire, et
- au moins une charge claire et/ou foncée, et
- d'autres additifs.

2. Procédé selon la revendication 1, **caractérisé en ce que** le terpène est choisi parmi les hémiterpènes, les monoterpènes, les sesquiterpènes, le diterpènes, les sesterpènes et les triterpènes.

3. Procédé selon l'une quelconque des revendications 1 à 3, **caractérisé en ce que** le mélange de caoutchouc résultant à l'étape b) comprend 0,4 à 20 pce de soufre.

4. Procédé selon l'une quelconque des revendications 1 à 3, **caractérisé en ce que** le soufre est utilisé dans un procédé de mélange à une étape ou à plusieurs étapes.

5. Utilisation d'un mélange de caoutchouc pouvant être fabriqué ou étant fabriqué selon l'une quelconque des revendications 1 à 3 pour la fabrication d'un pneu.

6. Utilisation d'un mélange de caoutchouc pouvant être fabriqué ou étant fabriqué selon l'une quelconque des revendications 1 à 3 pour la fabrication d'une bande de roulement et/ou d'un mélange de corps d'un pneu.

7. Utilisation
- d'au moins un terpène tel que défini dans l'une quelconque des revendications 1 à 2 et/ou
- d'au moins une huile hautement visqueuse telle que définie dans l'une quelconque des revendications 1 à 2, pour améliorer la dispersibilité de soufre dans des mélanges de caoutchouc, de préférence pour améliorer la dispersibilité de 0,4 à 20 pce de soufre dans des mélanges de caoutchouc.
